# EUROPEAN PATENT SPECIFICATION

(11) **EP 3 930 448 B1**
(45) Date of publication and mention of the grant of the patent: **11.01.2023**
(21) Application number: 19817688.5
(22) Date of filing: 09.12.2019
(51) Int. Cl.: A01G 25/16

(54) **BATTERY PLACEMENT WITH SENSOR**
BATTERIEPLATZIERUNG MIT SENSOR
PLACEMENT DE BATTERIE AVEC CAPTEUR

(30) Priority: 25.02.2019 DE 102019001318
(43) Date of publication of application: 05.01.2022
(73) Proprietor: HUSQVARNA AB, 561 82 Huskvarna (SE)
(72) Inventor: BURGER, Victor, 89073 Ulm (DE); WILK, Christian, 89079 Ulm (DE); BROBEIL, Achim, 89160 Dornstadt (DE)
(74) Representative: Finkele, Rolf
(86) International application number: PCT/EP2019/084276
(87) International publication number: WO 2020/173593

(56) References cited:
- US-A1- 2002 060 631
- US-A1- 2004 083 833

## Description

### TECHNICAL FIELD

The present disclosure relates to sensor devices. More specifically, the present disclosure relates to the sensor devices which provide benefits of a compact and space-efficient profile of the sensor devices without compromising antenna characteristics associated with them.

### BACKGROUND

Sensor devices include an antenna to exchange data generally with a mobile or stationary unit. For example a lawnmower in case of outdoor applications or a mobile phone directly or via a gateway, or with a computer system. During application, the sensor devices are installed in a ground surface from where the exchange of data with mobile unit takes place. But there have been concerns regarding hindrances to movement of the lawnmowers since generally a compact profile of the sensor devices leads to low range antenna characteristic (specially range of the antenna) leading to a less efficient implementation. This seems to be the case when the sensor devices are installed deep into the ground surface leading to loss of range of the antenna characteristic. To cater to this issue, there can be a provision to increase dimensions i.e. length of the antenna, and as a result dimensions of the sensor devices, or a compromise with the range (of the antenna characteristic) which are usually unacceptable for multiple reasons.

Moreover, such issues lead to an unreliable and less efficient working with the lawnmowers which may encounter hindrance and at times damage the sensor devices with comparatively large dimensions. There have been efforts in the past to address such issues but there is still a need for a solution to make the sensor devices more compact without affecting their antenna characteristics.

An example of a sensor device is provided by US93,26,462 (hereinafter referred to as '462 reference). The '462 reference provides a soil moisture sensor. The soil moisture sensor includes a sensor body having a horizontally elongated shape. A sensor circuit assembly is horizontally disposed within the sensor body, and an antenna is coupled to the sensor circuit assembly and oriented horizontally within the sensor body. A sensor probe assembly is connected at a first end of said sensor body so as to be generally perpendicular to the horizontally elongated shape of the sensor body. However, the '462 reference provides a staggered and broad arrangement of antenna within the soil moisture sensor. Further, the '462 reference may be limited with constraints related to any other shape/dimension/type of the antenna, compared to its present configuration.

US patent reference 2002/0060631 (hereinafter called as the '631 reference) provides an environmental sensor system that communicates sensor data to a receiving unit using wireless means such as a radio frequency signal. The receiving unit interfaces with a controllable system, possibly affecting its operation. A soil sensor is submerged within the soil. However, the '631 reference does not provide details about connections among various parts.

US patent reference 2004/0083833 ('hereinafter called as the 833 reference) discloses a wireless sensor probe which includes a separable probe body and sensor mast. The probe body includes a void which houses the sensor mast including one or more sensor devices for sensing a soil property. The probe body includes a probe top part for encapsulating the probe body and the sensor mast. The sensor mast is inserted into the probe body to form the sensor probe.

Thus, there is a need for improved sensor device which provides benefits of a compact profile while ensuring a wide-range antenna characteristic, without substantial changes to the sensor device.

### SUMMARY

In view of the above, it is an objective of the present invention to solve or at least reduce the drawbacks discussed above. The objective is at least partially achieved by a sensor device according to the appended claims.

The sensor device includes a housing placed at least in part on top of a soil surface. The sensor device includes at least one battery housed within a battery compartment in the housing. The sensor device includes a sensor electrically coupled with the at least one battery. The battery compartment of the sensor device is at least partly submerged into the soil surface. Thus, the present disclosure provides a simple, ergonomic, and efficient sensor device where the battery compartment is arranged in a space-saving and compact arrangement.

According to the present invention, the battery is housed in an upright position within the battery compartment. The upright position of the battery lowers the dimensional footprint of the battery along area of the sensor device leading to a compact arrangement.

According to an embodiment of the present invention, the sensor is at least in part incorporated on a sensor PCB. The sensor PCB may be crucial to sense one or more characteristics of area around the sensor device.

According to the present invention, the sensor is electrically connected to a secondary PCB and/or an antenna. Those having knowledge in the art will appreciate that a flexible wire or the like may be used to electrically connect the secondary PCB and the antenna to the sensor. The secondary PCB may include electrical components in electrical contact with the sensor. In case the sensor is at least in part integrated on a sensor PCB that itself includes electrical components in electrical contact with the sensor the electrical components on the secondary PCB might be in addition to those. In case the sensor device also includes an antenna, this secondary PCB might also include at least parts of the associated radio module. Further in case of the inclusion of an antenna the metallic surface and/or the metallic components of secondary PCB might interact with the antenna in a manner to optimize its performance by forming the some sort of a ground for the antenna located above this secondary PCB

According to an embodiment of the present invention, the battery is positioned within the housing such that the secondary PCB or the antenna substantially cover the battery from above within the area of the secondary PCB or the antenna. This covers the top surface of the battery below the secondary PCB or the antenna leading to a compact profile of the sensor device without any undue compromise with dimensions of the secondary PCB or the antenna.

According to an embodiment of the present invention, the battery compartment is in contact with the sensor PCB and is at least partly entered into the soil surface. This further makes the sensor device compact and easy to implement in the soil surface where multiple mobile units such as lawnmowers and the like may be working.

According to an embodiment of the present invention, the battery is in direct electrical contact with the secondary PCB or components thereon. This leads to benefits such as compactness, ease of handling and a low-cost electrical connection between the battery and the secondary PCB. In an other embodiment where there is no secondary PCB and/or antenna with the sensor but the sensor is connected to other components via an electric cable, the at least one battery is in electrical contact with this cable.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a sensor device along with some important parts thereof, in accordance with an embodiment of the present invention;
**FIG. 2** shows a perspective view of a sensor of the sensor device, in accordance with an embodiment of the present invention;
**FIG. 3** shows a perspective view of the sensor device submerged in a soil surface, in accordance with an embodiment of the present invention; and
**FIG. 4** shows a perspective views of the sensor device with a top cover and a battery cover attached thereto, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

The illustrated embodiments all show a sensor device embodying an antenna to communicate with external components be they mobile or stationary. It is understood for the one skilled in the art that invention not necessary is of need for this antenna; it as well could be that the secondary PCB **240** is not connected to any antenna but carries electrical components that are in electrical contact with the sensor **200;** it also could well be that sensor device does not embody any secondary PCB and/or antenna at all.

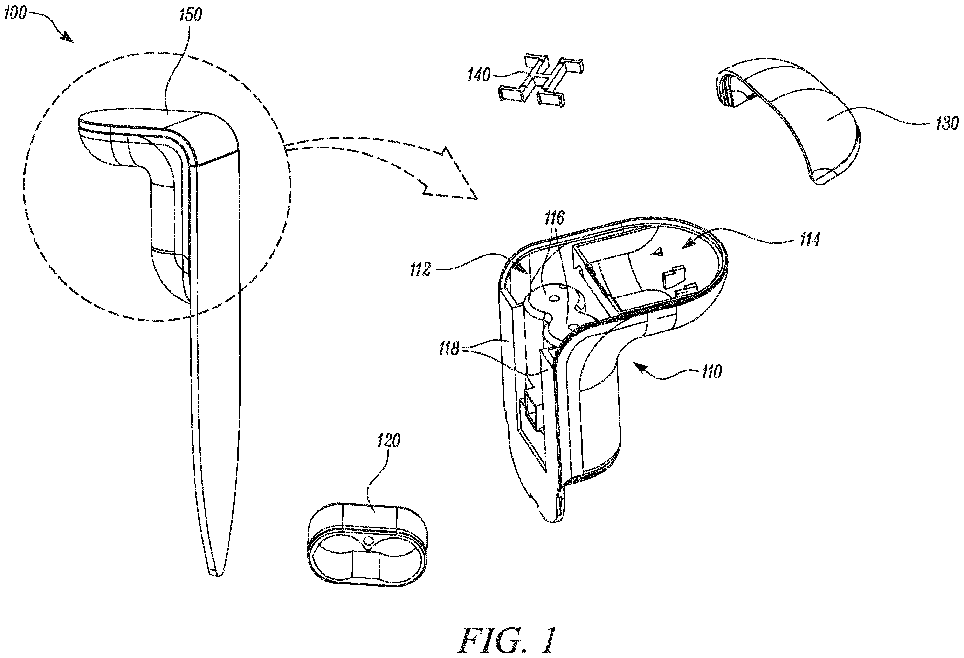

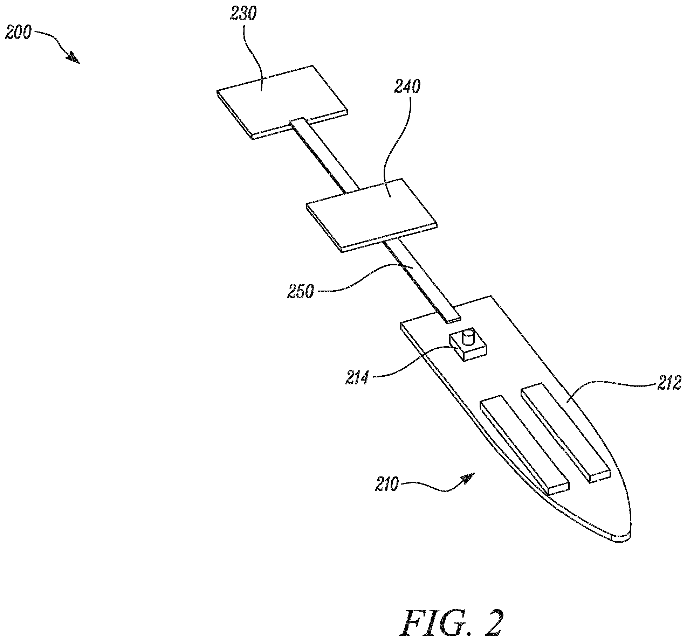

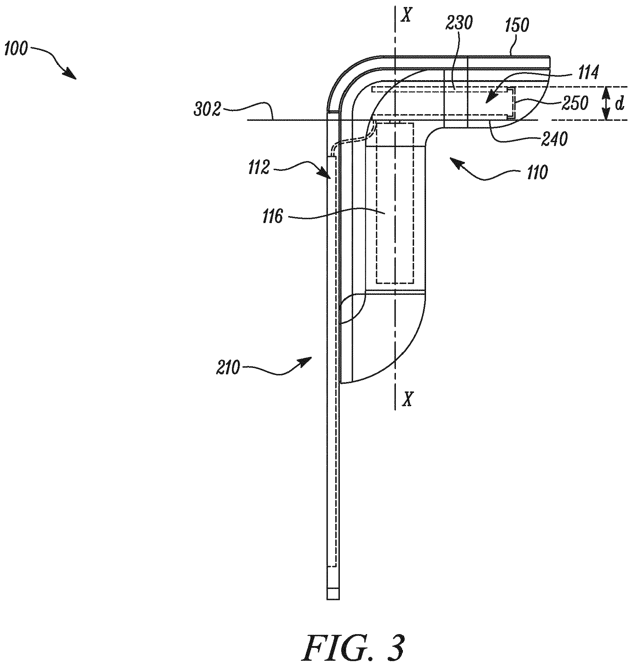

**FIG. 1** illustrates a the sensor device **100** along with some important parts of the sensor device **100.** The sensor device **100** finds applications in outdoor environments such as gardens, lawns and the like where monitoring of ground/soil/environment factors (say temperature, humidity, solar radiation) is required. The sensor device **100** is generally installed substantially inside a soil surface **302** (refer **FIG. 3**) (say ground surface) within the outdoor environments and it has an antenna **230** (shown in **FIG. 2**) to communicate the monitored information (of soil and the like) to an external device such as robotic mowers, user devices (say laptop, tab, smart phone). In some applications, the sensor device **100** may be readily removed from the ground of the outside environments for purposes such as maintenance, data collection and the like. The present disclosure primarily discusses effect on antenna characteristics of the antenna **230** of the sensor device **100,** when the antenna **230** is placed in vicinity of a secondary PCB **240** providing a metal surface (shown in **FIG. 1**) and the like, however the present disclosure can be readily applied to any electronic device which uses an antenna, PCBs or like component.

As illustrated, the sensor device **100** includes a housing **110.** The housing **110** is divided into a battery compartment **112** and an antenna housing **114.** Separation of the battery compartment **112** and the antenna housing **114** may be due to ergonomic consideration, ease of maintenance and low interference between working (say signals) from the antenna **230,** radio and electronic devices of the sensor device **100** among others. The housing **110** includes at least one battery **116** housed substantially deep within the battery compartment **112** of the housing **110,** while the present disclosure shows two batteries **116** housed within the housing **110.** The batteries **116** are housed substantially deep to free some space in the housing **110,** particularly around the antenna housing **114** for a compact and space-efficient arrangement of the antenna **230** and other components of the sensor device **100,** as will be evident to a person having knowledge in the art. According to the invention, the batteries **116** are inserted inside the housing **110** from below the housing **110** (as seen with respect to the perspective view illustrated here) however other installation position, direction, or orientation have been contemplated and are well within the scope of the present disclosure. Further, the housing **110** includes a rail **118** or any other attaching means to mate with a sensor **200** (attaching assembly as illustrated in **FIG. 3**). In some embodiments, the battery **116** can be a rechargeable battery, particularly which may be timely charged by use of solar radiation and the like during outdoor applications.

Moreover, when the batteries **116** are inserted inside the housing **110,** then a battery cap **120** (with installed O-ring and battery spring contacts, not shown) can be secured to the housing **110.** This will provide benefits such as proper positioning, and working of the batteries **116** within the housing **110.** After installation of the battery cap **120,** a battery cover **130** is used to cover the housing **110** from below and to check any undesirable removal or loss of the batteries **116.** The sensor device **100** of the present disclosure can further include an additional element such as a spacer frame **140.** The spacer frame **140** can have generally a "H" shape in various embodiments of the present disclosure, however the present disclosure is not to be limited by any shape/size/dimension/type of the spacer frame **140.** So, the spacer frame **140** may of any other shape say "I", "T", "O" or any alphabetical or convenient shape suitable for mass production and ease of assembly with the sensor device **100.** Moreover, the spacer frame **140** can be produced with any material such as, but not limited to, metal, glass fiber, rubber, with particular consideration to non-interference with working of the antenna **230,** PCBs and other electronic components of the sensor device **100.**

**FIG. 2** shows the sensor **200** of the sensor device **100.** The sensor **200** includes a sensor PCB **212** and a reset button **214** provided on a plate **210.** The reset button **214** can be used to reset the sensor **200,** or for any other functionality thereof as will be evident to a person having knowledge in the art. Further, a secondary PCB **240** (here also including the radio module) and an antenna **230** are attached to the plate **210** by a flexible wire **250.** The sensor **200** is electrically coupled, by means of the battery spring contacts, with the batteries **116** and configured with the antenna **230.**

The spacer frame **140** is generally used to set a predefined distance between the antenna **230** and secondary PCB **240** which is desirable to check any undue interference between signals from the antenna **230** and other components (particularly electronics) of the sensor device **100.** In some embodiments, may be configured to change the predefined distance between the antenna **230** and secondary PCB **240** dynamically to effectuate desired change to the antenna characteristic of the sensor device **100.** This feature may be readily employed to change the range of the antenna characteristic which, in turn, leads to change in the working range of mobile robotic devices such as mowers which are wirelessly connected with the sensor device **100.** Moreover, extended range of the antenna characteristic of the sensor device **100** may be required to supplement diminishing power of the batteries **116,** or to convey signal or notifications of draining battery status or any other issue to user devices (say mobile, laptop etc.).

In some embodiments, the secondary PCB **240** can be coupled to the antenna **230** through a spring-loaded contact element (not shown) similar to battery spring contacts of the present disclosure. Although, a spring-loaded arrangement is preferred, other arrangements as known or used in the art have been contemplated and are well within the scope of the present disclosure. Preference for the spring-loaded contact element can be attributed to ease of working, and maintenance among other benefits.

The sensor **200** measures at least one parameter associated with surrounding environment of the sensor **200.** In some embodiments, the sensor **200** can be a soil sensor. The sensor device **100** of the present disclosure can be readily implemented with any sensor including the soil sensor **200,** a temperature sensor, and a humidity sensor etc., and the present disclosure is not to be limited by the sensor **200** in any manner.

In particular, the plate **210** of the sensor **200** is attached by means of glue to the rail **118** of the housing **110,** however other attaching means such as, but not limited to, a magnet, mechanical coupling are possible and are well within the scope of the present disclosure. Further, the sensor device **100** includes the battery spring contacts with rivets which are used to set up an electrical connection between the batteries **116** and the sensor **200.**

**FIG. 3** illustrates the sensor device **100** submerged in the soil surface **302,** in accordance with an embodiment of the present invention. The sensor device **100** is shown here submerged around the top of the battery **116** in the soil surface **302** for exemplary purposes, and actual implementation of the sensor device **100** may have the sensor device **100** partially or fully submerged in the soil surface **302,** all such variations are well within the scope of the present disclosure. The sensor device **100** includes a housing **110** placed at least in part on top of the soil surface **302.** Further as illustrated, the sensor device **100** has the at least one battery **116** housed within the battery compartment **112** in the housing **110,** where the battery **116** has a battery axis **XX** which is shown here almost perpendicular to the soil surface **302** while other orientations of the battery **116** and the battery axis **XX** have been contemplated and are well within the scope of the present disclosure. The sensor device **100** includes the sensor **200** electrically coupled with the at least one battery **116.** The sensor device **100** has the battery compartment **112** at least partly submerged into the soil surface **302.** As illustrated, the battery **116** is housed in an upright position within the battery **116** compartment. The upright position of the battery **116** is along the battery axis **XX** which is generally perpendicular to the soil surface **302.** This lowers the dimensional footprint of the battery **116** along area of the sensor device **100** leading to a compact arrangement. In some embodiments, the sensor **200** is at least in part incorporated on the sensor PCB **212.** The sensor PCB **212** may be crucial to sense one or more characteristics (say humidity, temperature and the like) of area around the sensor device **100.**

In an embodiment of the present invention, the sensor **200** is electrically connected to the secondary PCB **240** (or components thereon) and/or the antenna **230.** Those having knowledge in the art will appreciate that the flexible wire **250** or any other electrical connecting means as used or known in the relevant art, may be used to electrically connect the secondary PCB **240** and the antenna **230** to the sensor **200.**

In some embodiments of the present invention, the battery **116** may be configured to move up or down so that the secondary PCB **240** and/or the antenna **230** too may be moved accordingly to further save on scape or any other requirement. This way the sensor **200** and the battery **116** may allow better packing of the secondary PCB **240** and the antenna **230** and thereby allow more compact configuration and possible enhanced profile of the sensor device **100.**

In an embodiment of the present invention, the battery **116** is positioned within the housing **110** such that the secondary PCB **240** or the antenna **230** substantially cover the battery **116** from above within the area of the secondary PCB **240** or the antenna **230.** This covers the top surface of the battery **116** below the secondary PCB **240** and/or the antenna **230** leading to a compact profile of the sensor device **100** without any undue compromise with dimensions of the secondary PCB **240** or the antenna **230.** Particularly, this allows compactness in dimension around top of the sensor device **100,** as can be appreciated with substantial reduction in size of the top cover **150** without compromising with the dimensions (length/width/height) of one or more of the secondary PCB **240** or the antenna **230.** This is possible since the secondary PCB **240** and/or the antenna **230** are placed around the top of the battery **116** while almost covering the area of the battery **116** perpendicular to the battery axis **XX,** and not separately in different housings as in case of some conventional arrangements which can be bulky and space consuming in application. In particular, this allows designing of the antenna housing **114** and/or the top cover **150** largely confirming to, and without any space wastage around the secondary PCB **240** or the antenna **230.**

In an embodiment of the present disclosure, the battery compartment **112** is in contact with the sensor PCB **212** and is at least partly entered into the soil surface **302.** This further makes the sensor device **100** compact and easy to implement in the soil surface **302** where multiple mobile units such as lawnmowers and the like may be simultaneously operating.

As illustrated here, the battery **116** is in direct electrical contact with the secondary PCB **240.** This leads to benefits such as compactness, ease of handling and a low-cost electrical connection between the battery **116** and the secondary PCB **240.** Moreover, this may also do away with requirement of any additional electrical connection such as, but need not necessarily, the flexible wire **250** between the battery **116** and the secondary PCB **240.**

Further, the antenna **230** has the metal surface of the secondary PCB **240** or electrical components thereon below the antenna **230.** The antenna **230** and the metal surface of the secondary PCB **240** or electrical components thereon are disposed at a predefined distance **d** relative to each other by presence of the spacer frame **140** (not shown explicitly from clarity and explanation considerations). In some embodiments, the spacer frame **140** has dimensions in accordance with the predefined distance **d.** The spacer frame **140** can be easily inserted or removed thereby allowing change in the predefined distance **d.** During implementation, presence of the spacer frame **140** between the antenna **230** and the metal surface of the secondary PCB **240** or electrical components thereon imparts the desired antenna characteristic. This allows wide application of the sensor device **100** with outdoor appliances such as robotic mowers etc.

As used herein, the present disclosure refers to "antenna characteristic" as a profile or range and like factors of the antenna **230** which have a bearing on exchange of data with any outdoor machine/unit/device (say robot mower, smartphone, laptop etc.) during working of the antenna **230.** Further, as will be evident to a person having knowledge in the art, the "antenna characteristic" needs to be as wide-in-range, above-ground, horizontally defined to enhance the working of the antenna **230** in accordance with an implementation of the present disclosure.

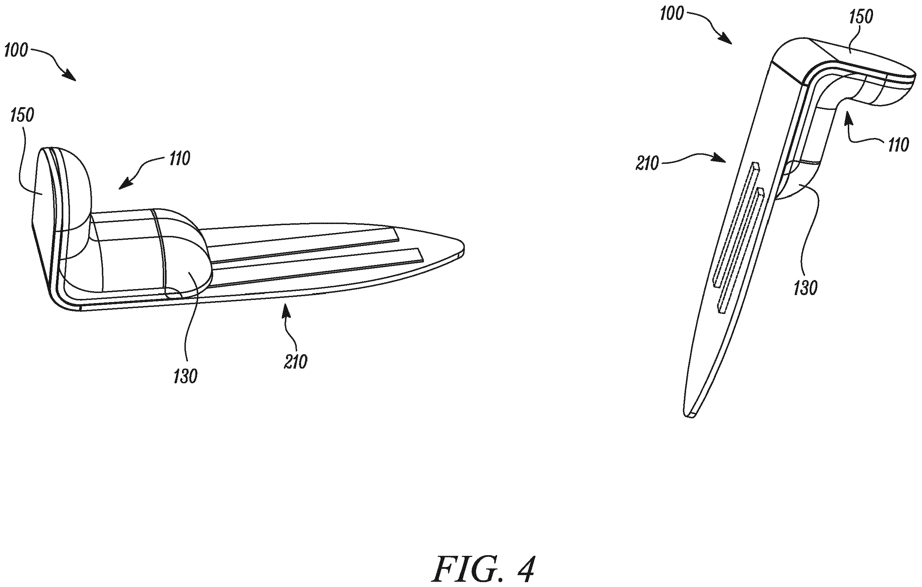

Further, **FIG. 4** illustrates different views of the antenna **230** of the sensor device **100** with the top cover **150.** In some embodiments, the antenna **230** can be at least partially enclosed by the top cover **150.** The top cover **150,** as illustrated in accordance with various implementations of the present disclosure, is provided to protect any component of the sensor device **100** from external agents (say dust, moisture) along with extending working life of the sensor device **100.** Further, the top cover **150** may also serve as a shock-proof and mechanical-access arrangement considering possible interaction of over ground portion of the sensor device **100** with mobile units such as lawnmowers and the like. During maintenance, the top cover **150** may allow better access to inside of the housing **110** of the sensor device **100** as per the need.

In some embodiments, the sensor device **100** further includes soil mounted valve boxes (not shown). The soil mounted valve boxes can be any type of the valve means which can allow better modulation of the water content during working with the sensor device **100.**

Moreover, the sensor device **100** has the battery cap **120** covering the batteries **116** to protect the batteries **116** from external elements (say rain, dust, humidity etc.) and allow proper orientation of the batteries **116** inside the housing **110.** The battery cap **120** further serves as an additional layer of protection and securement of the batteries **116** before the battery cover **130** is installed around the battery cap **120** and the housing **110.** Moreover, **FIG. 4** shows different views of the sensor device **100** of the present disclosure with the top cover **150** and the battery cover **130** attached thereto, making the sensor device **100** ready for the desired application.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Sensor Device
- **110**: Housing
- **112**: Battery Compartment
- **114**: Antenna Housing
- **116**: Battery
- **118**: Rail
- **120**: Battery Cap
- **130**: Battery Cover
- **140**: Spacer Frame
- **150**: Top cover
- **200**: Sensor
- **210**: Plate
- **212**: Sensor PCB
- **214**: Reset Button
- **230**: Antenna
- **240**: Metal Surface/Secondary PCB
- **250**: Flexible Wire
- **302**: Soil Surface
- **XX**: Battery Axis
- **d**: Predefined Distance

## Claims

1. A sensor device **(100)** comprising:
a housing **(110)** placed at least in part on top of a soil surface **(302);**
at least one battery **(116)** housed within a battery compartment **(112)** in the housing **(110),** wherein the battery compartment **(112)** is at least partly submerged into the soil surface **(302);**
a sensor **(200)** electrically coupled with the at least one battery **(116);**
the battery **(116)** is housed in an upright position within the battery compartment **(112),**
wherein the sensor **(200)** is electrically connected to a secondary PCB **(240)** and/or an antenna **(230);**
**characterized in that:**
the housing **(110)** has a top cover **(150)** and a battery cover **(130),**
to allow for the insertion of the at least one battery **(116)** into the housing **(110)** the battery cover **(130)** is removable, while being used to cover the housing **(110)** from below when installed.

2. The sensor device **(100)** of claim **1,** wherein a battery cap **(120)** covering the batteries **(116)** is secured to the housing.

3. The sensor device **(100)** of any one of the preceding claims , wherein the sensor **(200)** is at least in part incorporated on a sensor PCB **(212).**

4. The sensor device **(100)** of any one of the preceding claims, wherein the battery **(116)** is positioned within the housing **(110)** such that the secondary PCB **(240)** or the antenna **(230)** substantially cover the battery **(116)** from above within the area of the secondary PCB **(240)** or the antenna **(230).**

5. The sensor device **(100)** of claim 3, wherein the battery compartment **(112)** is in contact with the sensor PCB **(212).**

6. The sensor device **(100)** of any one of the preceding claims, wherein the battery **(116)** is in direct electrical contact with the secondary PCB **(240)** or components thereon.

## Patentansprüche

1. Eine Sensorvorrichtung **(100),** die Folgendes umfasst:
ein Gehäuse **(110),** das zumindest teilweise auf einer Bodenoberfläche **(302)** angeordnet ist;
mindestens eine Batterie **(116),** die in einem Batteriefach **(112)** in dem Gehäuse **(110)** untergebracht ist, wobei das Batteriefach **(112)** zumindest teilweise in die Bodenoberfläche **(302)** versenkt ist;
einen Sensor **(200),** der elektrisch mit der mindestens einen Batterie **(116)** gekoppelt ist;
die Batterie **(116)** ist in aufrechter Position im Batteriefach **(112)** untergebracht,
wobei der Sensor **(200)** elektrisch mit einer sekundären Leiterplatte **(240)** und/oder einer Antenne **(230)** verbunden ist;
**dadurch gekennzeichnet, dass:**
das Gehäuse **(110)** eine obere Abdeckung **(150)** und eine Batterieabdeckung **(130)** hat,
um das Einsetzen der mindestens einen Batterie **(116)** in das Gehäuse **(110)** zu ermöglichen, wobei die Batterieabdeckung **(130)** abnehmbar ist, während sie im eingebauten Zustand zur Abdeckung des Gehäuses **(110)** von unten dient.

2. Die Sensorvorrichtung **(100)** nach Anspruch 1, wobei ein Batteriedeckel **(120),** der die Batterien **(116)** abdeckt, am Gehäuse befestigt ist.

3. Die Sensorvorrichtung **(100)** nach einem der vorhergehenden Ansprüche, wobei der Sensor **(200)** zumindest teilweise auf einer Sensorplatine **(212)** untergebracht ist.

4. Die Sensorvorrichtung **(100)** nach einem der vorhergehenden Ansprüche, wobei die Batterie **(116)** innerhalb des Gehäuses **(110)** so positioniert ist, dass die sekundäre Leiterplatte **(240)** oder die Antenne **(230)** die Batterie **(116)** von oben im Bereich der sekundären Leiterplatte **(240)** oder der Antenne **(230)** im Wesentlichen abdeckt.

5. Die Sensorvorrichtung **(100)** nach Anspruch 3, wobei das Batteriefach **(112)** in Kontakt mit der Sensorplatine **(212)** steht.

6. Die Sensorvorrichtung **(100)** nach einem der vorhergehenden Ansprüche, wobei die Batterie **(116)** in direktem elektrischen Kontakt mit der sekundären Leiterplatte **(240)** oder Komponenten darauf ist.

## Revendications

1. Dispositif de détection **(100)** comprenant :
un boîtier **(110)** placé au moins en partie sur le dessus d'une surface du sol **(302)** ;
au moins une pile **(116)** logée dans un compartiment de pile **(112)** dans le boîtier **(110),** dans lequel le compartiment de pile **(112)** est au moins partiellement immergé dans la surface du sol **(302)** ;
un capteur **(200)** couplé électriquement à l'au moins une pile **(116)** ;
la pile **(116)** est logée dans une position verticale à l'intérieur du compartiment de pile **(112),**
dans lequel le capteur **(200)** est connecté électriquement à un circuit imprimé secondaire **(240)** et/ou à une antenne **(230)** ;
**caractérisé en ce que** :
le boîtier **(110)** comporte un couvercle supérieur **(150)** et un couvercle de pile **(130),**
pour permettre l'insertion de l'au moins une pile **(116)** dans le boîtier **(110),** le couvercle de pile **(130)** est amovible, tout en étant utilisé pour couvrir le boîtier **(110)** par le dessous lorsqu'il est installé.

2. Dispositif de détection **(100)** selon la revendication **1,** dans lequel un capuchon de pile **(120)** couvrant les piles **(116)** est fixé au boîtier.

3. Dispositif de capteur **(100)** selon l'une quelconque des revendications précédentes, dans lequel le capteur **(200)** est au moins en partie incorporé sur une carte de circuit imprimé de capteur **(212).**

4. Dispositif de détection **(100)** selon l'une quelconque des revendications précédentes, dans lequel la pile **(116)** est positionnée à l'intérieur du boîtier **(110)** de telle sorte que le circuit imprimé secondaire **(240)** ou l'antenne **(230)** recouvre sensiblement la pile **(116)** par le dessus dans la zone du circuit imprimé secondaire **(240)** ou de l'antenne **(230).**

5. Dispositif de capteur **(100)** selon la revendication 3, dans lequel le compartiment de pile **(112)** est en contact avec la carte de circuit imprimé de capteur **(212).**

6. Dispositif de capteur **(100)** selon l'une quelconque des revendications précédentes, dans lequel la pile **(116)** est en contact électrique direct avec la carte de circuit imprimé secondaire **(240)** ou des composants sur celle-ci.
